# EUROPÄISCHE PATENTANMELDUNG

(11) **EP 0 771 999 A2**
(43) Veröffentlichungstag der Anmeldung: **07.05.1997**
(21) Anmeldenummer: 96114948.1
(22) Anmeldetag: 18.09.1996
(51) Int. Cl.: F21V 21/34

(54) **Niedervoltstromschienensystem für Leuchten**

(30) Priorität: 02.11.1995 DE 29517289 U; 17.11.1995 DE 29518253 U; 19.04.1996 DE 19615525
(71) Anmelder: Briloner Leuchten GmbH, 59929 Brilon (DE)
(72) Erfinder: Braun, Peter, 59581 Warstein (DE)
(74) Vertreter: Fritz, Edmund Lothar, Dipl.-Chem.

(57) **Zusammenfassung**

Ein Niedervoltstromschienensystem für Leuchten umfaßt Niedervoltstromschienen (1) aus zwei parallel zueinander verlaufenden, streifenförmigen leitenden Außenschichten (2) und einer zwischen diesen angeordneten isolierenden Schicht (3). Die Verbindung von zwei Niedervoltstromschienen (1) oder der Anschluß von Niedervoltstromschienen an Anschlußvorrichtungen oder Befestigungsvorrichtungen kann dadurch realisiert werden, daß die leitenden Außenschichten (2) an den Enden der Niedervoltstromschienen (1) jeweils um etwa 90° nach außen umgebogen sind, so daß sich an jedem Ende einer Niedervoltstromschiene zwei Verbindungsflächen (4) ergeben. Diese Verbindungsflächen (4) sind beispielsweise an die zwei entsprechenden Verbindungsflächen (4) einer weiteren Niedervoltstromschiene (1) anlegbar, wobei die Verbindungsflächen von miteinander zu verbindenden Niedervoltstromschienen (1) beispielsweise durch Schrauben (6) und Muttern (7) durch geeignete Bohrungen (5) aneinander festlegbar sind. Der Verbindungsbereich von zwei oder beispielsweise vier miteinander verbundenen Niedervoltstromschienen (1) kann durch geeignete Verkleidungskörper umgeben werden. Die Verbindung von vier Niedervoltstromschienen unter einem Winkel von 90° kann durch vier Kontaktblöcke mit je zwei Kontaktflächen realisiert werden, wobei jeweils zwei sich diagonal gegenüberliegende Kontaktblöcke elektrisch leitend miteinander verbunden sind.

## Beschreibung

Die vorliegende Erfindung betrifft ein Niedervoltstromschienensystem für Leuchten, insbesondere ein Niedervoltstromschienensystem umfassend Niedervoltstromschienen aus zwei parallel zueinander laufenden, streifenförmigen leitenden Außenschichten und einer zwischen diesen angeordneten isolierenden Schicht, Anschlußvorrichtungen für Leuchten oder dergleichen, Befestigungsvorrichtungen für die Befestigung der Niedervoltstromschienen an Decken oder Wänden und Verbindungsvorrichtungen für die Verbindung von Niedervoltstromschienen aneinander.

Ein Niedervoltstromschienensystem der vorgenannten Art weist in der Regel aufgrund der geringen Dicke der Außenschichten biegsame Niedervoltstromschienen auf und ist beispielsweise aus der DE 41 24 066 A1 bekannt. Bei dem darin beschriebenen Niedervoltstromschienensystem werden zwei Niedervoltstromschienen dadurch verbunden, daß ihre Enden in eine längliche, die Enden beider Stromschienen in einem Endbereich überlappende, elektrisch jeweils einseitig leitende Hülse eingeschoben werden. Die Hülse wird nach Einschieben der Endbereiche der Stromschienen zusammengeschraubt, wobei sich eine elektrisch leitende Verbindung der jeweiligen leitenden Außenschichten der beiden Niedervoltstromschienen ergibt. Allerdings zeigt sich, daß bei der in der DE 41 24 066 A1 beschriebenen Verbindung Spannungsabfälle zwischen den beiden Niedervoltstromschienen auftreten können, weil eine gute leitende Verbindung zwischen den jeweiligen Außenschichten der Stromschienen über die Hülse nicht immer gewährleistet ist. Da die Endbereiche der Niedervoltstromschienen in der Hülse nur durch das Zusammenpressen der Hülse gehalten sind, ergibt sich auch keine feste mechanische Verbindung zwischen den beiden Stromschienen. Weiterhin als nachteilig erweist sich, daß die Hülse nicht wie die übrige Stromschiene biegsam ist, so daß der Verbindungsbereich in Form der Hülse bei einem durch zwei gebogene Stromschienen gebildeten Bogen als nicht gebogene gerade Strecke ins Auge fällt. Zudem ist die Verbindungshülse ein aufwendig herzustellendes Teil, das zusätzlich einen größeren Montageaufwand, nämlich das Einschieben der Stromschienen und das Zusammenpressen der Hülse durch Schrauben erfordert. Weiterhin ermöglicht die genannte Hülse nicht das Zusammenfügen von drei oder mehr Stromschienen an einem Ort.

Das der vorliegenden Erfindung zugrunde liegende Problem ist die Schaffung eines Niedervoltstromschienensystems für Leuchten der vorgenannten Art, das einfach herstellbare und montierbare Verbindungen mit hoher Festigkeit, vernachlässigbaren Spannungsabfällen und einem kleinen Biegemoment aufweist, wobei der Verbindungsbereich zweier miteinander verbundenen Niedervoltstromschienen zusätzlich ein ansprechendes Äußeres aufweist.

Dies wird erfindungsgemäß dadurch erreicht, daß die Verbindungsvorrichtungen dadurch realisiert werden, daß die leitenden Außenschichten an den Enden der Niedervoltstromschienen jeweils um etwa 90° nach außen umgebogen sind, so daß sich an jedem Ende einer Niedervoltstromschiene zwei Verbindungsflächen ergeben, die an die zwei entsprechenden Verbindungsflächen einer weiteren Niedervoltstromschiene anlegbar sind, wobei die Verbindungsflächen von miteinander zu verbindenden Niedervoltstromschienen durch geeignete Befestigungsmittel aneinander festlegbar sind. Die Umbiegungen der Außenschichten sind fertigungstechnisch sehr einfach herzustellen, wobei die Verbindungsfläche vorzugsweise mit einer zentralen Bohrung versehen wird. Eine Verbindung zwischen zwei Niedervoltstromschienen kann dann dadurch realisiert werden, daß die Verbindungsflächen aneinandergelegt werden und Schrauben durch die Bohrungen hindurch geschoben werden, so daß mit darauf aufgeschraubten Muttern die umgebogenen Enden der Niedervoltstromschienen aneinandergepreßt werden. Dadurch entsteht eine sehr feste Verbindung zwischen den Niedervoltstromschienen, die aufgrund der großen aneinandergepreßten Flächen einen sehr geringen Übergangswiderstand aufweist, so daß keinerlei Spannungsabfälle auftreten. Weiterhin wird durch die aneinandergeschraubten umgebogenen Endstücke der Außenschichten die Biegsamkeit der Niedervoltstromschienen in keinster Weise beeinträchtigt, so daß bei der erfindungsgemäßen Verbindung nicht die aus dem Stand der Technik bekannten geraden Stücke in zwei miteinander verbundenen Bögen auftauchen.

Gemäß einer alternativen Ausführungsform sind die Befestigungsmittel als Klammern ausgeführt, die auf die aneinander liegenden Verbindungsflächen miteinander zu verbindender Niedervoltstromschienen aufschiebbar sind. Die Klammern können die Schrauben und Bohrungen ersetzen, und erlauben ein noch einfacheres Herstellen der Verbindung.

Gemäß einer bevorzugten Ausführungsform der vorliegenden Erfindung umfaßt das Niedervoltstromschienensystem weiterhin Verkleidungskörper, die wahlweise eine Anschlußvorrichtung, eine Befestigungsvorrichtung oder eine Verbindungsvorrichtung umgeben können. Auf diese Weise werden die Verbindungsvorrichtungen so verkleidet, daß sie optisch in das Gesamtbild des Niedervoltstromschienensystems eingefügt werden.

Vorteilhafterweise umfassen die Verkleidungskörper eine vorzugsweise zylindrische Hülse mit mindestens einer Aufnahme für die Niedervoltstromschiene und eine auf die Hülse aufschraubbare oder aufschnappbare Kappe. In die Hülse ist vorzugsweise ein isolierendes Innenteil mit einem Kragen einschiebbar, der so in der Aufnahme anliegt, daß bei in der Aufnahme befindlicher Niedervoltstromschiene keine elektrisch leitende Verbindung zwischen den Außenschichten und den Hülsen vorliegt. Das isolierende Innenteil kann beispielsweise als Anschlußvorrichtung mit in dem Innenteil angeordneten, in die Aufnahme hineinragenden bügelförmigen Kontaktelementen ausgeführt sein. Nach Einschieben der Niedervoltstromschiene in die Aufnahme kontaktieren die bügelförmigen Kontaktelemente automatisch die Außenschichten der Stromschiene und stellen über entsprechende als Zuleitungen dienende Kabel eine elektrisch leitende Verbindung zu einem an die Anschlußvorrichtung angeschlossenen Strahler oder auch zu einer zur Stromeinspeisung verwendeten Spannungsquelle her.

Vorzugsweise ist die Aufnahme in Form eines das Innenteil durchquerenden Spalts mit etwa rechteckigem dem Querschnitt der Niedervoltstromschiene entsprechenden Querschnitt in diesem ausgenommen, wobei sich die spaltförmige Aufnahme von der Oberseite des Innenteils nach unten erstreckt. Vorzugsweise weisen die bügelförmigen Kontaktelemente jeweils einen gebogenen, streifenförmigen Teil auf, der nach dem Einschieben der bügelförmigen Kontaktelemente in das Innenteil mit seiner Biegung von außen etwas in die Aufnahme hineinragt, so daß eine in der Aufnahme befindliche Niedervoltstromschiene von den gebogenen, streifenförmigen Teilen jeweils auf einer Seite kontaktiert wird. Die mit den Zuleitungen verbindbaren bügelförmigen Kontaktelemente sind also so in dem Innenteil angeordnet, daß die durch die Aufnahme hindurchragende Niedervoltstromschiene automatisch von den gebogenen streifenförmigen Teilen kontaktiert wird.

Gemäß einer bevorzugten Ausführungsform der vorliegenden Erfindung erstrecken sich von beiden Seiten der Aufnahme zwei gegenüberliegende Spalte etwa senkrecht zur Längsrichtung der Aufnahme nach außen in dem Innenteil, die eine Ausdehnung von der Oberseite des Innenteils bis zur Unterseite der Aufnahme aufweisen, wobei von der Aufnahme etwas nach außen zurückversetzt in jedem der Spalte zwei quaderförmige Anformungen angeordnet sind, die sich von etwas unterhalb der Oberseite des Innenteils bis zur Unterseite der Aufnahme erstrecken und somit eine Schulter in dem Spalt bilden, wobei mittig zwischen den Anformungen ein Zwischenraum frei bleibt. Vorzugsweise schließt sich oben an den gebogenen streifenförmigen Teil des bügelförmigen Kontaktelements eine etwa rechtwinklige Abwinklung an, wobei diese nach dem Einschieben des bügelförmigen Kontaktelements in das Innenteil auf der von den Anformungen gebildeten Schulter aufliegt und der sich unten daran anschließende gebogene, streifenförmige Teil auf der der Aufnahme zugewandten Seite der Anformungen teilweise an diesen anliegt und teilweise etwas in die Aufnahme hineinragt. Die bügelförmigen Kontaktelemente sind also schnell und einfach von oben in das Innenteil einschiebbar und befinden sich aufgrund der Auflage der Abwinklung auf der Schulter in dem Innenteil automatisch in der richtigen Position, um die Niedervoltstromschiene zu kontaktieren. Durch den Zwischenraum zwischen den Anformungen in dem Spalt kann jeweils eine Zuleitung von einer vorzugsweise im unteren Bereich des Innenteils vorgesehenen Öffnung nach oben hindurchgeführt werden.

Gemäß einer bevorzugten Ausgestaltung des Erfindungsgedankens ist in der Abwinklung des bügelförmigen Kontaktelements eine etwa zentrale Bohrung angeordnet und oberhalb dieser auf der Abwinklung eine ringförmige Hülse mit einer diese durchdringenden Gewindebohrung befestigt, wobei in dem Innenteil auf beiden Seiten im Bereich der oberen Enden der Spalte jeweils eine Bohrung vorgesehen ist, die das Einschrauben einer Schraube von außerhalb des Innenteils in die Gewindebohrung des in das Innenteil eingeschobenen bügelförmigen Kontaktelements erlaubt. Die zwischen den Anformungen nach oben hindurchgeführten, vorzugsweise an ihren Enden abisolierten Zuleitungen können durch die zentrale Bohrung in der Abwinklung und die ringförmige Hülse hindurchgeführt werden. Danach wird die Schraube durch das Innenteil in die Gewindebohrung der ringförmigen Hülse eingeschraubt, so daß die Schraube die abisolierten Enden der Zuleitungen in der ringförmigen Hülse festlegt.

Gemäß einer alternativen Ausführungsform der vorliegenden Erfindung erweitert sich der von der Aufnahme nach außen erstreckende Spalt kurz vor seinem Ende zu einem zu der Aufnahme parallelen Schlitz, wobei sich an die Abwinklung des bügelförmigen Kontaktelementes ein sich nach oben erstreckender Abschnitt mit etwa quadratischem Grundriß anschließt, der sich nach Einschieben des bügelförmigen Kontaktelementes in das Innenteil in dem Schlitz befindet, wobei in dem Abschnitt mit etwa quadratischem Grundriß eine Lasche ausgeformt ist, die bei in dem Schlitz befindlichem Abschnitt in Richtung auf das Ende des Spaltes nach außen ragt. Durch die Lasche können die vorzugsweise abisolierten Enden der Zuleitungen, die zwischen den Anformungen nach oben ragen zwischen der endseitigen Wandung des Spaltes und der Lasche eingeklemmt werden. Durch das Einschieben der bügelförmigen Kontaktelemente von oben in den Spalt, bzw. den Schlitz bei vorher nach oben aus dem Innenteil herausgeführten Zuleitungen werden die Zuleitungen somit automatisch kontaktiert und festgelegt, so daß nur noch die über die Oberseite des Innenteils hinausragenden Enden der Zuleitungen abgeschnitten werden müssen.

Gemäß einer bevorzugten Ausgestaltung des Erfindungsgedankens umgibt auf der Außenseite des Innenteils ein Kragen die Aufnahme so, daß eine von unten auf das Innenteil aufgeschobene, in ihrer Form etwa dem Innenteil entsprechende Hülse bündig mit dem Kragen abschließt. Die Hülse gibt der Anschlußvorrichtung zusammen mit einer Kappe ein abgerundetes Äußeres, wobei durch den bündig abschließenden Kragen auch die Öffnungen der Aufnahme optisch gut geschlossen werden. Weiterhin werden die teilweise leitenden Bereiche des Innenteils, wie beispielsweise die Befestigungen der bügelförmigen Kontaktelemente durch die Hülse und die Kappe abgeschirmt.

Die Verkleidung einer Verbindungsvorrichtung kann dadurch realisiert werden, daß in ein isolierendes Innenteil der Verbindungsbereich zweier oder mehrerer miteinander verbundener Niedervoltstromschienen einschiebbar ist. Der Verbindungsbereich wird durch den in dem Innenteil angeordneten Kragen von dem äußeren vorzugsweise metallischen Gehäuse elektrisch isoliert. Die Hülse kann beispielsweise mit einer Befestigungsvorrichtung für die Befestigung an einer Decke oder an einer Wand verbunden sein, so daß die Hülse mit Innenteil gleichzeitig als beispielsweise Deckenaufhängung der Niedervoltstromschiene und als Verkleidung des Verbindungsbereichs beispielsweise zweier Niedervoltstromschienen dient.

Gemäß einer bevorzugten Ausgestaltung des Erfindungsgedankens umfaßt das Niedervoltstromschienensystem weiterhin elektrisch leitende Kontaktblöcke, die auf mindestens zwei benachbarten ebenen Seitenflächen Gewindebohrungen aufweisen, so daß die Verbindungsfläche einer Niedervoltstromschiene mittels einer Schraube an einer dieser Seitenflächen befestigbar ist. Die beiden Verbindungsflächen des Endes einer Niedervoltstromschiene können beispielsweise an zwei nebeneinander liegende voneinander isolierte Kontaktblöcke angeschraubt werden. An die jeweils zweiten Seitenflächen der Kontaktblöcke mit Gewindebohrungen können wiederum Verbindungsflächen zweier weiterer Niedervoltstromschienen angeschraubt werden. Die beiden übrigen Verbindungsflächen der beiden weiteren Niedervoltstromschienen können jeweils mit einem dritten und einem vierten Kontaktblock verschraubt werden, die über Kabel oder dergleichen über Kreuz mit den ersten beiden Kontaktblöcken verbunden werden. Auf diese Weise lassen sich zwei, drei, vier oder mehrere Niedervoltstromschienen durch eine entsprechende Anzahl von Kontaktblöcken elektrisch leitend miteinander verbinden, so daß jeweils jede der leitenden Außenschichten einer Niedervoltstromschiene jeweils mit einer der beiden leitenden Außenschichten jeder der anderen Niedervoltstromschienen verbunden ist.

Vorzugsweise sind vier Kontaktblöcke elektrisch voneinander isoliert etwa in den Ecken eines Quadrats angeordnet, wobei jeweils zwei mit Gewindebohrungen ausgestattete Seitenflächen eines jeden der Kontaktblöcke nach außen gerichtet sind, und wobei diagonal gegenüberliegende Kontaktblöcke mittels eines Kabels oder eines anderen geeigneten Verbindungsmittels elektrisch leitend miteinander verbunden sind. Durch auf diese Weise angeordnete Kontaktblöcke können bis zu vier in Form eines Kreuzes senkrecht aufeinander zulaufende Niedervoltstromschienen elektrisch leitend miteinander verbunden werden. Gleichzeitig besteht aber auch die Möglichkeit, nur drei Niedervoltstromschienen T-förmig miteinander zu verbinden oder nur zwei Niedervoltstromschienen L-förmig miteinander zu verbinden. Die über den Verbindungsbereich der Niedervoltstromschienen geschobenen Hülsen weisen vier kreuzförmig angeordnete Schlitze auf, durch die die Niedervoltstromschienen in das Innere der Hülse geführt werden können. Falls nur zwei oder drei Niedervoltstromschienen miteinander verbunden werden sollen, können die entsprechend freigebliebenen Schlitze mit passend darin einschiebbaren Blindstücken verstopft werden. Auf diese Weise kann die gleiche Hülse für die Verkleidung des Verbindungsbereichs von zwei, drei oder vier miteinander verbundenen Niedervoltstromschienen genutzt werden.

Durch entsprechende Anordnung mehrerer Kontaktblöcke können auch andere Winkel zwischen den miteinander zu verbindenden Niedervoltstromschienen erreicht werden, indem beispielsweise fünf Kontaktblöcke in den Ecken eines Fünfecks oder sechs Kontaktblöcke in den Ecken eines Sechsecks angeordnet sind.

Gemäß einer bevorzugten Ausführungsform der vorliegenden Erfindung umfaßt der Verkleidungskörper zwei aneinanderlegbare ringförmige Hülsenteile und zwei auf diese aufsetzbare Kappen sowie ein in die Hülsenteile einschiebbares topfförmiges isolierendes Innenteil, wobei eine axial in dem Verkleidungskörper ausgerichtete Gewindestange vorgesehen ist, mit Hilfe der die Hülsenteile, die Kappen und das topfförmige isolierende Innenteil aneinander festlegbar sind. Vorzugsweise weisen die Hülsenteile und das topfförmige isolierende Innenteil jeweils vier einander entsprechende einseitig offene rechteckige Schlitze auf, die jeweils in Winkelabständen von 90° zueinander angeordnet sind. Vorteilhafterweise wird als Verbindungsmittel für jeweils zwei Kontaktblöcke ein Ring verwendet, an dem einseitig die beiden Kontaktblöcke sich radial auf unterschiedlichen Seiten seiner zentralen Bohrung gegenüberliegend und von dieser beabstandet befestigt sind. Vorzugsweise sind die Kontaktblöcke etwa prismenförmig gestaltet, wobei deren an dem Ring anliegenden und deren von dem Ring abgekehrten Seiten etwa die Form eines gleichschenklig rechtwinkligen Dreiecks aufweisen, wobei die sich auf unterschiedlichen Seiten der zentralen Bohrung radial gegenüberliegenden Flächen der Kontaktblöcke die Verbindungsflächen zwischen den Hypothenusen der gleichschenklig rechtwinkligen Dreiecke sind, und wobei die von dem Ring nach außen ragenden, mit Gewindebohrungen für das Anschrauben der Niedervoltstromschienen versehenen Seitenflächen der Kontaktblöcke die Verbindungsflächen zwischen den Katheten der gleichschenklig rechtwinkligen Dreiecke sind. Vorteilhafterweise sind die Gewindebohrungen für das Anschrauben der Niedervoltstromschienen auf den entsprechenden Seitenflächen der Kontaktblöcke etwas außermittig in Richtung auf die der an dem Ring anliegenden Seiten gegenüberliegenden Seiten der Kontaktblöcke angeordnet. Vorzugsweise ist für die Halterung der beiden Ringe mit den jeweils zwei daran befestigten Kontaktblöcken in dem Verkleidungskörper ein etwa würfelförmiges isolierendes Innenteil vorgesehen, an das die beiden Ringe von zwei gegenüberliegenden Seiten des Innenteils so anlegbar sind, daß die vier mit den Ringen verbundenen Kontaktblöcke mit ihren Verbindungsflächen zwischen den Hypothenusen der Dreiecke an den Außenseiten des etwa würfelförmigen isolierenden Innenteils jeweils um 90° gegeneinander versetzt drehfest anliegen, wobei die jeweils nebeneinander angeordneten Kontaktblöcke voneinander elektrisch isoliert sind. Vorteilhafterweise weist das etwa würfelförmige isolierende Innenteil eine durchgehende Bohrung auf, die die an die Ringe anlegbaren Seitenflächen des Innenteils mittig durchdringt, wobei der Innendurchmesser der Bohrung etwa dem Außendurchmesser der axial in dem Verkleidungskörper ausgerichteten Gewindestange entspricht. Vorzugsweise weist das etwa würfelförmige isolierende Innenteil auf den beiden an die Ringe anlegbaren Seitenflächen jeweils einen die Bohrung umgebenden rohrförmigen Ansatz auf, auf den jeweils ein Ring mit den innenteilseitig befestigten Kontaktblöcken formschlüssig aufschiebbar ist. Vorteilhafterweise sind an dem etwa würfelförmigen isolierenden Innenteil an den beiden an die Ringe anlegbaren Seitenflächen jeweils einander gegenüberliegende abgerundete Anformungen angeordnet, die mit den Oberflächen der an die Ringe anlegbaren Seitenflächen abschließen und deren Ausdehnung etwa den über den würfelförmigen Grundkörper des isolierenden Innenteils herausragenden zwischen den beiden Kontaktblöcken befindlichen Abschnitten des auf einen der Ansätze aufgeschobenen Rings entspricht, wobei die Dicke der Anformungen etwa der Dicke der Ringe entspricht, und wobei die an den gegenüberliegenden Seitenflächen angeordneten Anformungen um 90° gegeneinander versetzt sind. An die Außenseiten der an dem würfelförmigen isolierenden Innenteil anliegenden Kontaktblöcke können insgesamt vier Niedervoltstromschienen angeschraubt werden. Nach Entfernen einer Kappe und des daran anliegenden ringförmigen Hülsenteils kann das etwa würfelförmige isolierende Innenteil mit den daran befestigten Niedervoltstromschienenenden durch Aufschieben auf die Gewindestange in den Verkleidungskörper eingeschoben werden, wobei die Enden der Niedervoltstromschienen durch die in dem Hülsenteil und dem topfförmigen isolierenden Innenteil ausgenommenen Schlitze ragen. Durch Wiederaufschieben des zweiten ringförmigen Hülsenteils auf das topfförmige isolierende Innenteil und Aufsetzen der abgenommenen Kappe sowie durch Verschrauben der Kappe auf der Gewindestange, umgibt der Verkleidungskörper stabil den Verbindungsbereich der vier Niedervoltstromschienen. Die beschriebene bevorzugte Ausführungsform des Verkleidungskörpers stellt eine besonders stabile und dabei gleichzeitig schnell und einfach montierbare und demontierbare Ausführungsform dar. Insbesondere durch das Aufschieben des etwa würfelförmigen isolierenden Innenteils auf die Gewindestange und die formschlüssige Anlage der die Kontaktblöcke tragenden Ringe an den Ansätzen des würfelförmigen isolierenden Innenteils ergibt sich eine stabile Halterung der Niedervoltstromschienen in dem Verkleidungskörper. Die Anformungen an den beiden an den Ringen anlegbaren Seitenflächen erhöhen zum einen die Stabilität der Auflage der Ringe auf den Seitenflächen. Zum anderen stellen sie eine zusätzliche Isolierung zwischen dem Ring und den von der anderen Seite heranragenden, an dem anderen Ring befestigten Kontaktblöcken dar. Durch die etwa um die Dicke der Ringe außermittige Anordnung der Gewindebohrungen für die Anbringung der Niedervoltstromschienen wird gewährleistet, daß sich die Gewindebohrungen von an unterschiedlichen Ringen befestigten Kontaktblöcken nach dem Aufschieben der beiden Ringe auf die einander gegenüberliegenden Ansätze des etwa würfelförmigen isolierenden Innenteils auf gleicher Höhe befinden. Dies ermöglicht die problemlose Befestigung einer Niedervoltstromschiene an den Kontaktblöcken.

Weitere Merkmale und Vorteile der vorliegenden Erfindung werden deutlich anhand der nachfolgenden Beschreibung einiger bevorzugter Ausführungsbeispiele unter Bezugnahme auf die beiliegenden Abbildungen. Darin zeigen
- Fig. 1a: eine perspektivische Ansicht des Verbindungsbereichs zweier Niedervoltstromschienen gemäß der vorliegenden Erfindung;
- Fig. 1b: eine Draufsicht auf den Verbindungsbereich zweier erfindungsgemäß miteinander verbundener Niedervoltstromschienen;
- Fig. 1c: eine Seitenansicht des Verbindungsbereichs zweier gemäß einer alternativen Ausführungsform der Erfindung aneinander festgelegter Niedervoltstromschienen;
- Fig. 2a: eine Seitenansicht auf einen erfindungsgemäßen Verkleidungskörper, der den Verbindungsbereich zweier miteinander verbundener Niedervoltstromschienen umgibt;
- Fig. 2b: eine Draufsicht auf den oben geöffneten Verkleidungskörper gemäß Fig. 2a;
- Fig. 2c: einen Schnitt längs der Isolierschicht der Niedervoltstromschiene gemäß Fig. 2a;
- Fig. 3a: eine Seitenansicht eines den Verbindungsbereich zweier Niedervoltstromschienen umgebenden Verkleidungskörpers mit Deckenaufhängung;
- Fig. 3b: eine Draufsicht auf den oben geöffneten Verkleidungskörper gemäß Fig. 2a;
- Fig. 4a: eine Seitenansicht eines an einer Niedervoltstromschiene angebrachten Verkleidungskörpers, der eine Anschlußvorrichtung für einen Strahler umgibt;
- Fig. 4b: einen Schnitt durch ein in den Verkleidungskörper gemäß Fig. 4a einschiebbares Innenteil;
- Fig. 5a: eine Seitenansicht eines den Verbindungsbereich vierer Niedervoltstromschienen umgebenden Verkleidungskörpers mit Deckenaufhängung;
- Fig. 5b: eine Draufsicht auf den oben geöffneten Verkleidungskörper gemäß Fig. 5a;
- Fig. 6: ein Kurvenstück einer erfindungsgemäßen Niedervoltstromschiene;
- Fig. 7a: eine Seitenansicht einer alternativen Ausführungsform eines den Verbindungsbereich vierer Niedervoltstromschienen umgebenen Verkleidungskörpers;
- Fig. 7b: eine teilweise geschnittene Seitenansicht des Verkleidungskörpers gemäß Fig. 7a;
- Fig. 7c: eine Draufsicht auf den oben geöffneten Verkleidungskörper gemäß Fig. 7a;
- Fig. 8a: eine Draufsicht auf ein erfindungsgemäßes in den Verkleidungskörper gemäß Fig. 7 einbaubares Kunststoffinnenteil;
- Fig. 8b: eine Seitenansicht des Kunststoffinnenteils gemäß Fig. 8a;
- Fig. 8c: eine gegenüber Fig. 8b um 90° gedrehte Seitenansicht des Kunststoffinnenteils gemäß Fig. 8a;
- Fig. 9a: eine Draufsicht auf zwei über einen Ring miteinander verbundene Kontaktblöcke, die in einen Verkleidungskörper gemäß Fig. 7 einbaubar sind;
- Fig. 9b: eine Seitenansicht der über einen Ring miteinander verbundenen Kontaktblöcke gemäß Fig. 9a;
- Fig. 10: eine perspektivische Explosionsansicht einer ersten Ausführungsform einer Anschlußvorrichtung;
- Fig. 11: eine Seitenansicht des Gehäuses der Anschlußvorrichtung gemäß Fig. 10;
- Fig. 12: eine Draufsicht auf das Gehäuse gemäß Fig. 10;
- Fig. 13: eine perspektivische Explosionsansicht einer weiteren Ausführungsform einer Anschlußvorrichtung;
- Fig. 14: eine Seitenansicht des Gehäuses der Anschlußvorrichtung gemäß Fig. 13;
- Fig. 15: eine Draufsicht auf das Gehäuse gemäß Fig. 13.

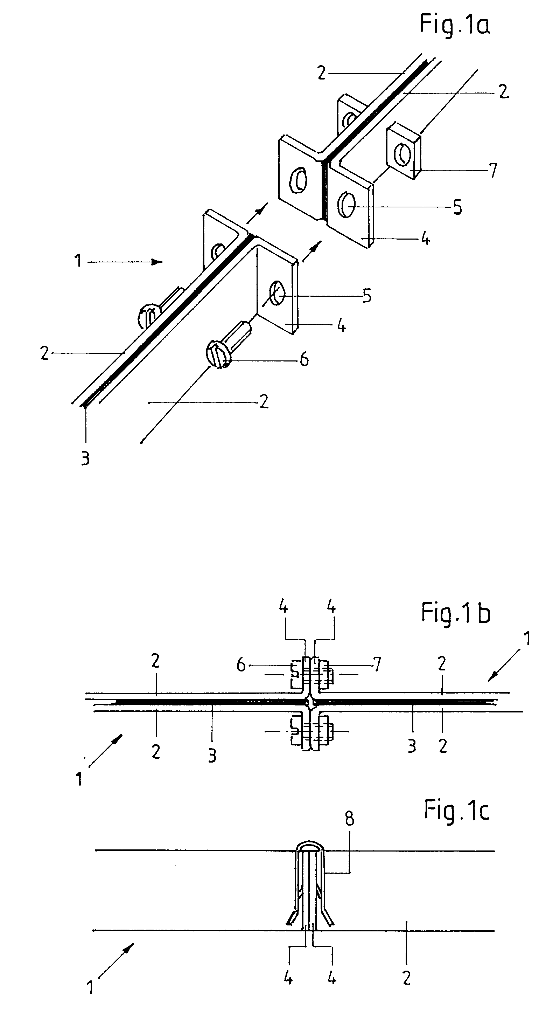

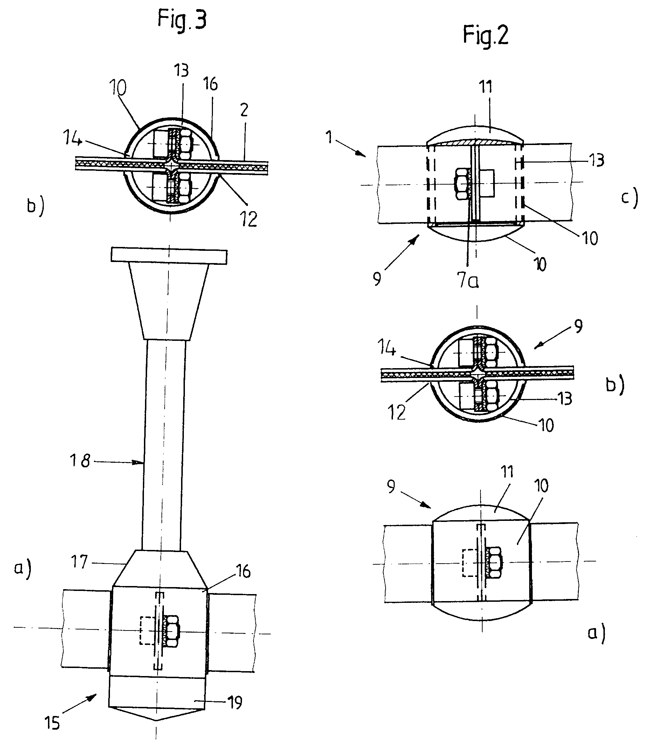

Wie aus den Fig. 1a bis 1c ersichtlich ist, umfassen die Niedervoltstromschienen 1 zwei beispielsweise aus Messingblech gefertigte streifenförmige leitende Außenschichten 2 und eine zwischen diesen befindliche Isolierschicht 3, die beispielsweise durch ein Doppelklebeband realisiert sein kann. Die Niedervoltstromschienen 1 sind aufgrund der geringen Dicke der Außenschichten 2 biegsam. Die leitenden Außenschichten weisen in ihrem Endbereich um 90° umgebogene schmale Verbindungsflächen 4 auf, die entsprechend der Ausführungsform gemäß den Fig. 1a und 1b mit einer etwa zentralen Bohrung 5 versehen sind. Die Verbindungsflächen 4 zweier miteinander zu verbindender Niedervoltstromschienen 1 werden so aneinander gelegt, daß sich die jeweiligen Bohrungen 5 decken. Mittels einer durch die Bohrungen 5 hindurchgeführten Schraube 6 und einer auf diese aufgeschraubten Mutter 7 können die Verbindungsflächen 4 fest aneinander geschraubt werden, so daß eine leitende Verbindung zwischen den entsprechenden streifenförmigen leitenden Außenschichten 2 der Niedervoltstromschienen 1 zustande kommt. Dabei kann vor dem Aufschrauben der Muttern 7 eine Zahnscheibe 7a (siehe Fig. 2c) untergelegt werden, um die Festigkeit der Verbindung zu erhöhen.

Gemäß der in Fig. 1c abgebildeten alternativen Ausführungsform weisen die Verbindungsflächen 4 keine Bohrungen 5 auf. Hier wird die Verbindung durch das Aufschieben einer Klammer auf die aneinandergepreßten Verbindungsflächen 4 hergestellt.

Wie aus den Fig. 2 bis 3 ersichtlich ist, kann der Verbindungsbereich zweier miteinander verbundener Niedervoltstromschienen 1 durch einen Verkleidungskörper 9 abgedeckt werden. Der Verkleidungskörper 9 umfaßt eine Hülse 10, die vorzugsweise aus dem Material der leitenden Außenschichten 2 gefertigt ist. Auf die Hülse 10 kann von oben eine Kappe 11 aufgeschraubt oder aufgeschnappt werden. Die Hülse 10 hat in etwa die Form eines Hohlzylinders mit einer nach unten kappenförmig hervorstehenden Bodenfläche und einer Aufnahme 12 mit rechteckigem Querschnitt, in die die Niedervoltstromschienen 1 von oben eingeschoben werden können. In die Hülse 10 wird ein isolierendes Innenteil 13 eingeschoben, das einen Kragen 14 aufweist, der so in der Ausnehmung 12 anliegt, daß die in diese eingeschobene Niedervoltstromschiene nicht in elektrisch leitenden Kontakt zu der metallischen Hülse 10 gerät.

Der in den Fig. 3a und 3b abgebildete Verkleidungskörper 15 weist eine etwa zylindrische Hülse 16 mit konisch zulaufendem Endstück 17 auf. Aus dem konischen Endstück 17 ist ein an dem Verkleidungskörper 15 befestigtes Deckenaufhängungselement 18 nach oben herausgeführt. Auf die Hülse 16 kann eine Kappe 19 aufgeschraubt oder aufgeschnappt werden.

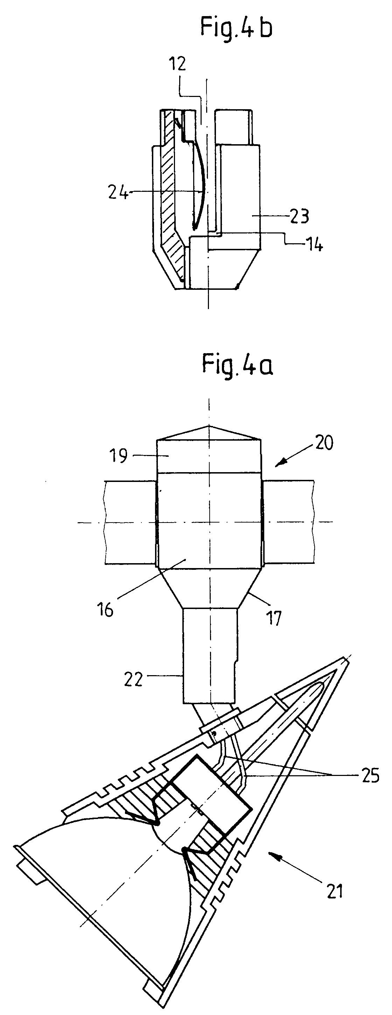

Der in Fig. 4a und 4b abgebildete Verkleidungskörper 20 weist ebenfalls eine Hülse 16 mit konisch zulaufendem Endstück 17 und eine auf die Hülse 16 aufschraubbare Kappe 19 auf. Anstelle des Deckenaufhängungselements ist in der Ausführungsform gemäß Fig. 4 ein Strahler 21 mit dem Verkleidungskörper 20 verbunden. Ein entsprechendes Strahlerbefestigungselement 22 ist aus dem konisch zulaufenden Endstück 17 herausgeführt. Das im Innern der Hülse 16 befindliche Innenteil 23 weist in die Aufnahme 12 hineinragende federnde bügelförmige Kontaktelemente 24 auf, die bei in die Aufnahme 12 eingeschobener Niedervoltstromschiene 1 deren leitende Außenschichten 2 elektrisch kontaktieren und die abgegriffene Spannung an den Strahler über die Zuleitungen 25 weitergeben.

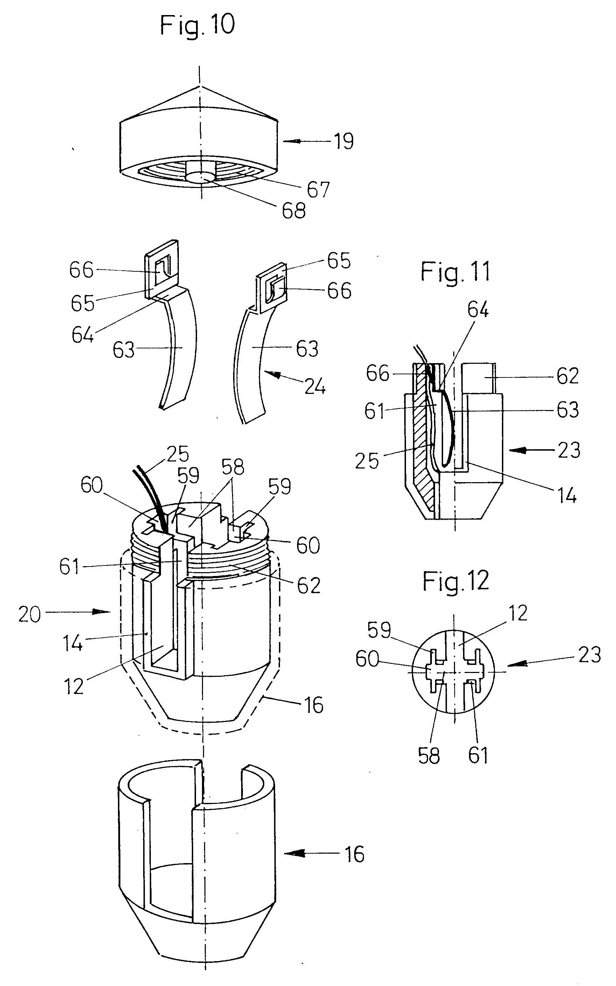

In den Fig. 10 bis Fig. 15 sind zwei alternative Ausführungsformen der Befestigung der Zuleitungen 25 an den bügelförmigen Kontaktelementen 24 in dem Innenteil 23 abgebildet. Die durch das Innenteil 23 und die bügelförmigen Kontaktelemente 24 gebildete Anschlußvorrichtung kann auch über die Zuleitungen 25 mit einer Spannungsversorgung verbunden werden und so eine Stromeinspeisung in das Niedervoltstromschienensystem ermöglichen.

Wie aus den Fig. 10 bis Fig. 12 ersichtlich ist, verlaufen von der Oberseite des Innenteils 23 bis zur Unterseite der Aufnahme 12 senkrecht zur Längsrichtung der Aufnahme 12 von deren Außenseiten radial nach außen zwei Spalte 58, die sich etwa auf der halben Strecke zwischen der Außenseite der Aufnahme 12 und dem Umfang des zylindrischen Innenteils 23 zu einem zu der Aufnahme 12 parallelen Schlitz 59 verbreitern, um in eine sich in radialer Richtung an den Schlitz 59 anschließende Ausnehmung 60 mit rechteckigem Grundriß überzugehen, deren Breite kleiner ist als die Breite des Spaltes 58. Von einer etwas unterhalb der Oberfläche des Innenteils 23 befindlichen Höhe bis zur Unterseite der Aufnahme 12 sind von der Aufnahme 12 etwas radial nach außen zurückversetzt zwei Anformungen 61 in dem Spalt 58 angeordnet, die somit etwas unterhalb der Oberseite des Innenteils 23 eine Schulter bilden. Die beiden Anformungen 61 lassen zwischen sich jeweils einen Zwischenraum frei, der in etwa ihrer Dicke in Richtung der Ausnehmung 12 entspricht.

Das Innenteil 23 weist weiterhin ein Außengewinde 62 an seinem oberen Ende auf. An die Unterseite des Außengewindes 62 anschließend umgibt ein Kragen 14 die Aufnahme 12, der bei auf das Innenteil 23 aufgeschobener Hülse 16 bündig mit dieser abschließt, wie aus der in Fig. 10 gestrichelt das Innenteil 23 umgebenden Hülse 16 ersichtlich ist.

Von der Unterseite können in das Innenteil 23 Zuleitungen 25 eingeführt und durch den Zwischenraum zwischen den Anformungen 61 nach oben geführt werden, so daß deren abisolierte Enden in der Ausnehmung 60 anliegen können. Zur Herstellung einer elektrisch leitenden Verbindung zwischen diesen abisolierten Enden der Zuleitungen 25 und der in die Aufnahme 12 einführbaren Niedervoltstromschiene 1 können die bügelförmigen Kontaktelemente 24 von oben in das Innenteil 23 eingeschoben werden. Das bügelförmige Kontaktelement 24 weist ein streifenförmiges, im Umriß etwa rechteckiges Unterteil 63 auf, das in seiner Längsrichtung gebogen ist, so daß der mittlere Abschnitt etwas nach außen vorsteht. Das Unterteil 63 weist an seinem oberen Ende eine rechtwinklige Abwinklung 64 auf, die sich nach hinten von der nach außen gebogenen Seite wegerstreckt. Die Abwinklung 64 geht in einen senkrecht nach oben verlaufenden Abschnitt 65 über, der einen etwa quadratischen Umriß aufweist. In der Mitte dieses etwa quadratischen Abschnitts 65 ist eine ebenfalls etwa quadratische Lasche 66 ausgestanzt, die sich von dem quadratischen Abschnitt 65 nach hinten von dem streifenförmigen Abschnitt 63 wegerstreckt.

Nach dem Einschieben des bügelförmigen Kontaktelements 24 in das Innenteil 23 ruht die rechtwinklige Abwinklung 64 auf der von den Anformungen 61 gebildeten Schulter. Das streifenförmige Unterteil 63 des bügelförmigen Kontaktelements 24 erstreckt sich entlang der Anformungen 61 von deren oberer Kante bis zur Unterseite der Aufnahme 12, wobei das streifenförmige Unterteil 63 aufgrund seiner Verbiegung mit seinem mittleren Abschnitt etwas in die Aufnahme 12 hinein ragt. Auf diese Weise wird gewährleistet, daß eine in der Aufnahme 12 befindliche Niedervoltstromschiene 1 sicher durch das Unterteil 63 kontaktiert wird. Der etwa quadratische Abschnitt 65 des bügelförmigen Kontaktelements 24 ruht nach dem Einschieben in das Innenteil 23 in dem Schlitz 59, wobei die Lasche 66 das abisolierte Ende der Zuleitung 25 in die Ausnehmung 60 preßt und festhält, so daß dieses nicht mehr verrutschen kann. Somit können nach Einschieben der bügelförmigen Kontaktelemente 24 die oberen, über die Oberseite des Innenteils 23 hinausstehenden Enden der Zuleitungen 25 abgeschnitten werden. Danach kann die Hülse 16 von unten auf das Innenteil 23 aufgeschoben werden. Von oben kann die Kappe 19 mit ihrem Innengewinde 67 auf das Außengewinde 62 des Innenteils 23 aufgeschraubt werden, so daß die Unterkante der Kappe 19 an der Oberkante der Hülse 16 anliegt und ein mittig in der Kappe 19 angeordneter Sockel 68 auf der Oberseite der Niedervoltstromschiene 1 aufliegt.

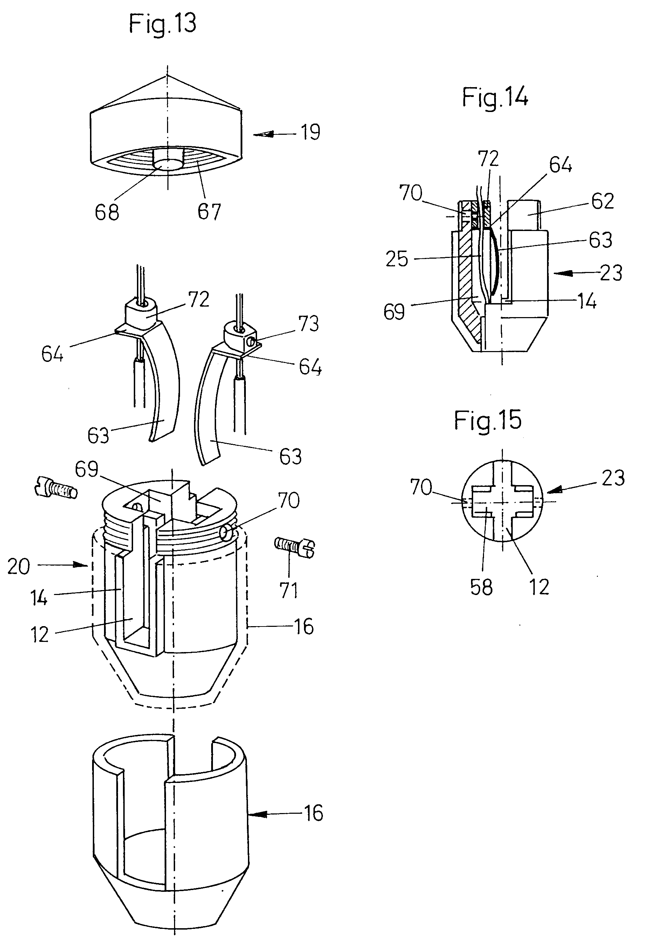

In den Fig. 13 bis Fig. 15 ist eine alternative Ausführungsform der Anschlußvorrichtung abgebildet. Bei dieser Ausführungsform ist anstelle des radial nach außen gerichteten Spalts 58, des sich daran anschließenden Schlitzes 59 und der daran anschließenden Ausnehmung 60 ein radial nach außen gerichteter Spalt 69 vorgesehen, an dessen oberem, der Aufnahme 12 entgegengesetztem Ende eine radiale Bohrung 70 angeordnet ist. Wie in der ersten Ausführungsform sind auch bei der zweiten Ausführungsform jeweils zwei Anformungen 61 von der zentralen Aufnahme 12 etwas radial nach außen zurückversetzt in dem Spalt 69 angeordnet, die eine Schulter für die Auflage der Abwinklung 64 des bügelförmigen Kontaktelements 24 bilden. Bei der Ausführungsform gemäß den Fig. 13 bis Fig. 15 entfällt der vom hinteren Ende der Abwinklung 64 senkrecht nach oben ragende Abschnitt 65. Anstelle dessen ist etwa mittig auf der Abwinklung 64 eine ringförmige Hülse 72 befestigt, die auf ihrer von dem streifenförmigen Unterteil 63 abgewandten Seite eine Gewindebohrung 73 aufweist. Die Abwinklung 64 des bügelförmigen Kontaktelements 24 ist unterhalb der zentralen Öffnung der ringförmigen Hülse 72 durchbohrt, so daß das abgewinkelte Ende der Zuleitung 25 durch die Abwinklung 64 und die ringförmige Hülse 72 hindurch geschoben werden kann. Durch Schrauben 71, die durch die Bohrungen 70 in dem Innenteil 23 in die Gewindebohrungen 73 der in das Innenteil 23 eingeschobenen bügelförmigen Kontaktelemente 24 eingeschraubt werden können, können die abisolierten Enden der Zuleitungen 25 in den ringförmigen Hülsen 72 fixiert werden.

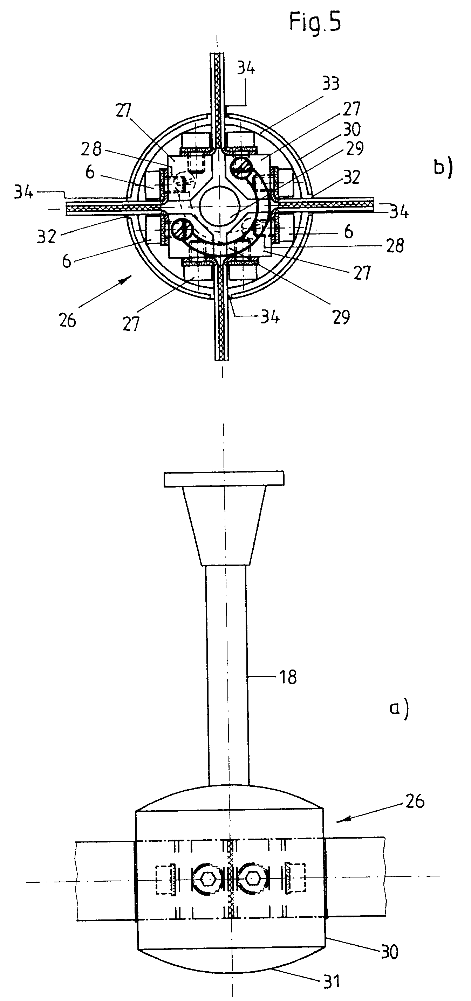

In den Fig. 5a und 5b ist ein Verkleidungskörper 26 abgebildet, der den Verbindungsbereich von vier miteinander verbundenen Niedervoltstromschienen 1 umgibt. Für die Verbindung der vier Niedervoltstromschienen 1 sind vier elektrisch leitende, etwa quaderförmige Kontaktblöcke 27 etwa in den Ecken eines Quadrats voneinander elektrisch isoliert angeordnet. Von diesem Quadrat ragen die Niedervoltstromschienen 1 jeweils in Richtung der Mittelsenkrechten auf den Seiten nach außen weg. Jeder der Kontaktblöcke 27 weist auf seinen zwei nach außen zeigenden Seiten Gewindebohrungen 28 auf, in die die durch die Bohrungen 5 der Verbindungsflächen 4 hindurchgeschobenen Schrauben 6 eingeschraubt werden können. Auf diese Weise kontaktiert jede der Niedervoltstromschienen 1 mit jeder ihrer zwei Verbindungsflächen 4 einen Kontaktblock 27. Jeweils zwei sich diagonal gegenüberliegende Kontaktblöcke 27 sind mittels eines Kabels 29 elektrisch leitend miteinander verbunden. Auf diese Weise wird gewährleistet, daß jede der leitenden Außenschichten 2 einer Niedervoltstromschiene jeweils mit einer der beiden leitenden Außenschichten 2 jeder der anderen Niedervoltstromschienen 1 verbunden ist.

Die diesen Verbindungsbereich umgebende Hülse 30 kann beispielsweise mit einem Deckenaufhängungselement 18 verbunden sein, wobei auf die Hülse 30 eine Kappe 31 aufschraubbar ist. Die Hülse 30 weist vier sich jeweils gegenüberliegende, unten offene rechteckige Schlitze 32 auf, in die die vier Niedervoltstromschienen 1 eingeschoben werden können. Die vier Schlitze 32 bilden somit zwei sich kreuzende, den Aufnahmen 12 entsprechende Aufnahmen für die Niedervoltstromschienen 1. In die Hülse 30 ist ein isolierendes Innenteil 33 mit einem Kragen 34 einschiebbar, der die in die Schlitze 32 eingeschobenen Niedervoltstromschienen so umgibt, daß die Hülse 30 von den Niedervoltstromschienen 1 elektrisch isoliert ist.

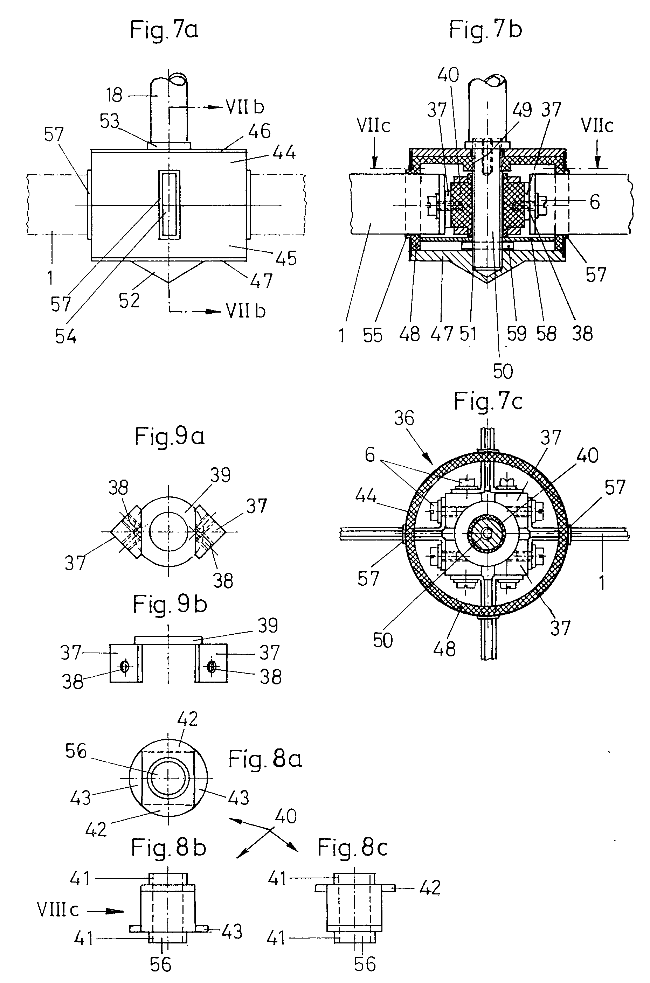

Aus den Fig. 7 bis 9 ist eine zu dem Verkleidungskörper 26 in den Fig. 5a und 5b alternative Ausführungsform eines den Verbindungsbereich von vier miteinander verbundenen Niedervoltstromschienen 1 umgebenden Verkleidungskörpers 36 abgebildet. Bei dieser Ausbildungsform sind für die Verbindung der vier Niedervoltstromschienen 1 vier elektrisch leitende, etwa prismenförmige Kontaktblöcke 37 etwa in den Ecken eines Quadrats voneinander elektrisch isoliert angeordnet. Die Ober- und die Unterseite jedes der Kontaktblöcke 37 hat etwa die Form eines gleichschenklig rechtwinkligen Dreieckes. Die nach außen gerichteten etwa quadratischen Seiten der Kontaktblöcke 37 bilden jeweils die Verbindungsflächen zwischen den Katheten der gleichschenklig rechtwinkligen Dreiecke. Die Verbindungsflächen zwischen den Hypothenusen der gleichschenklig rechtwinkligen Dreiecke sind nach innen auf das Zentrum des zylindrischen Verkleidungskörpers 36 gerichtet. Jeder der Kontaktblöcke 37 weist auf seinen nach außen gerichteten Flächen Gewindebohrungen 38 auf, in die zur Befestigung der Niedervoltstromschienen 1 die durch die Bohrungen 5 der Verbindungsflächen 4 hindurch geschobenen Schrauben 6 eingeschraubt werden können. Entsprechend dem Ausführungsbeispiel gemäß Fig. 5 kontaktiert auf diese Weise jede der Niedervoltstromschienen 1 mit jeder ihrer zwei Verbindungsflächen 4 einen Kontaktblock 37.

Wie aus den Fig. 9a und 9b ersichtlich ist, sind jeweils sich diagonal gegenüberliegende Kontaktblöcke 37 mittels eines elektrisch leitenden Rings 39 miteinander verbunden. Für die Halterung der Ringe 39 in dem Verkleidungskörper 36 ist ein aus den Fig. 8a bis 8c ersichtliches Kunststoffinnenteil 40 vorgesehen, daß eine im wesentlichen würfelförmige Gestalt aufweist. An der Oberseite und der Unterseite des Kunststoffinnenteils 40 ist jeweils eine röhrenförmige Anformung 41 angebracht, deren Außendurchmesser etwa dem Innendurchmesser der Ringe 39 entspricht. Weiterhin sind an dem Kunststoffinnenteil 40 obere und untere abgerundete Anformungen 42, 43 angebracht. Die oberen Anformungen 42 liegen einander gegenüber und ragen in Fig. 8c von dem etwa würfelförmigen Kunststoffinnenteil 40 nach links und rechts weg. Die unteren Anformungen 43 liegen einander ebenfalls gegenüber und sind gegenüber den oberen Anformungen 42 um 90° versetzt, so daß sie in Fig. 8c von dem etwa würfelförmigen Kunststoffinnenteil nach vorne und nach hinten wegragen und in Fig. 8b von dem Kunststoffinnenteil nach links und rechts wegragen. Durch die Formgestaltung des Kunststoffinnenteils 40 wird gewährleistet, daß jeweils von oben und von unten ein Ring 39 mit zwei Kontaktblöcken 37 auf das Kunststoffinnenteil 40 aufschiebbar ist, wobei jeweils ein Ring 39 eine röhrenförmige Anformung 41 umschließt und wobei jeweils die zwei Innenseiten von über einen Ring 39 miteinander verbundenen Kontaktblöcken 37 an zwei gegenüberliegenden Außenseiten des etwa würfelförmigen Kunststoffinnenteils anliegen. Dabei bilden die abgerundeten Anformungen 43, 43 eine Auflage für die zwischen den Kontaktblöcken 37 befindlichen Abschnitte der Ringe 39.

Aus den Fig. 7a bis 7c ist ersichtlich, daß der Verkleidungskörper 36 aus einem oberen und einem unteren ringförmigen Hülsenteil 44, 45 sowie einer oberen und einer unteren Kappe 46, 47 zusammengesetzt ist. Die Hülsenteile 44, 45 und die Kappen 46, 47 können vorzugsweise aus dem Material der leitenden Außenschichten 2 der Niedervoltstromschienen 1 gefertigt sein. In die ringförmigen Hülsenteile 44, 45 ist ein topfförmiges isolierendes Innenteil 48 einschiebbar, das mittig in seinem Topfboden eine Gewindebohrung 49 aufweist. In die Gewindebohrung 49 ist eine Gewindestange 50 einschraubbar, die auf der Oberseite durch eine zentrale in der oberen Kappe 46 angeordnete Bohrung hindurchragt und auf deren unteres Ende die untere Kappe 47 mit einer in diese mittig eingeschnittenen Gewindebohrung 51 aufschraubbar ist. Zu diesem Zweck weist die scheibenförmige untere Kappe 47 eine untere kegelförmige Anformung 52 auf, in die die Gewindebohrung 51 teilweise von oben hineinragt. Auf der Oberseite der oberen Kappe 46 kann auf die Gewindestange 50 ein Ring 53 mit Innengewinde aufgeschraubt werden, um die den Verkleidungskörper 36 bildenden Hülsenteile 44, 45 und die Kappen 46, 47 zusammenzuhalten. Die Hülsenteile 44, 45 weisen vier sich jeweils gegenüberliegende aufeinander zugerichtete unten bzw. oben offene rechteckige Schlitze 54 auf, in die die vier Niedervoltstromschienen 1 eingeschoben werden können. Die vier Schlitze 54 bilden somit den Schlitzen 32 entsprechende Aufnahmen für die Niedervoltstromschienen 1. Das topfförmige isolierende Innenteil 48 weist ebenfalls vier sich jeweils gegenüberliegende einseitig offene rechteckige Schlitze 55 auf, durch die die durch die Schlitze 54 hindurchragenden Niedervoltstromschienen 1 ebenfalls hindurchragen können. Entsprechend dem in den Fig. 5 abgebildeten Ausführungsbeispiel kann das topfförmige isolierende Innenteil 48 einen Kragen 57 aufweisen, der die Schlitze 54 so umgibt, daß die Hülsenteile 44, 45 von den Niedervoltstromschienen 1 elektrisch isoliert sind.

Das Kunststoffinnenteil 40 weist eine durchgehende Bohrung 56 auf, deren Innendurchmesser etwa dem Außendurchmesser der Gewindestange 50 entspricht, so daß das Kunststoffinnenteil auf die Gewindestange 50 aufschiebbar ist. Die Gewindebohrungen 38 in den nach außen weisenden Flächen der Kontaktblöcke 37 sind jeweils außermittig so auf den Außenseiten der Kontaktblöcke angeordnet, daß sich die Mittelpunkte der Gewindebohrungen 38 von oben und von unten vermittels der Ringe 39 auf das Kunststoffinnenteil 40 aufgeschobener Kontaktblöcke in gleicher Höhe befinden. Auf diese Weise können an zwei sich in der gleichen Ebene befindenden Außenseiten zweier Kontaktblöcke 37 die Verbindungsflächen 4 einer Niedervoltstromschiene 1 angeschraubt werden. Die vier Enden von vier auf diese Weise an den Kontaktblöcken 37 befestigten Niedervoltstromschienen 1 können zusammen mit dem die Kontaktblöcke 37 tragenden Kunststoffinnenteil nach Entfernen der unteren Kappe 47 und des unteren ringförmigen Hülsenteils 45 in den Verkleidungskörper 36 eingeschoben werden, wobei das Kunststoffinnenteil 40 mit der durchgehenden Bohrung 46 auf die Gewindestange 50 aufgeschoben wird und die Enden der Niedervoltstromschienen 1 durch die Schlitze 54, 55 hindurch ragen. Durch Aufschieben des unteren ringförmigen Hülsenteils und Aufschrauben der unteren Kappe 47 wird das Kunststoffinnenteil 40 und damit die mit diesen verbundenen Enden der Niedervoltstromschienen 1 fest in dem Verkleidungskörper 36 gehaltert. Zwischen unterem Ende des Kunststoffinnenteils 40 und unterer Kappe 47 kann eine beispielsweise isolierende Abdeckscheibe 58 unter Zuhilfenahme einer Mutter 59 eingefügt werden. Dadurch wird die Stabilität der Halterung des Kunststoffinnenteils 40 erhöht. Auf das obere aus der oberen Kappe 46 und dem aufschraubbaren Ring 53 herausragende Ende der Gewindestange 50 kann beispielsweise ein Deckenaufhängungselement 18 aufgeschraubt werden.

Die in den Fig. 5a und 5b sowie in den Fig. 7 bis 9 abgebildeten Verbindungsvorrichtungen können auch bei einer T-förmigen Verbindung dreier Niedervoltstromschienen und bei einer L-förmigen Verbindung zweier Niedervoltstromschienen 1 benutzt werden, wobei dann jeweils die nicht benutzten rechteckigen Schlitze 32, 54 durch ein passend darin einschiebbares Blindstück verstopft werden.

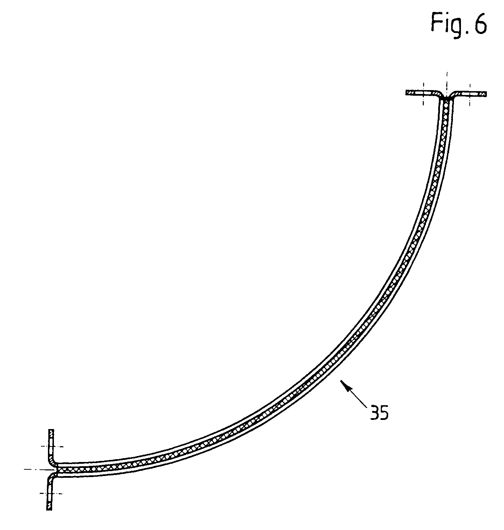

In Fig. 6 ist eine Niedervoltstromschiene abgebildet, die zu einem Kurvenstück 35 gebogen ist. Die Fertigung eines solchen Kurvenstücks 35 erweist sich dann als notwendig, wenn die Niedervoltstromschiene verchromt ist und auf einem relativ kurzen Stück ein beispielsweise rechter Winkel realisiert werden soll. Da bei Biegung nach Verchromung bei einem so kleinen Biegeradius die Verchromung abspringen würde, muß daß Kurvenstück 35 erst gebogen und dann verchromt werden. Dieses Verfahren kann auch bei anderen Radien oder bei S-Bögen Anwendung finden.

## Patentansprüche

1. Niedervoltstromschienensystem für Leuchten umfassend Niedervoltstromschienen (1) aus zwei parallel zueinander laufenden, streifenförmigen leitenden Außenschichten (2) und einer zwischen diesen angeordneten isolierenden Schicht (3), Anschlußvorrichtungen (23, 24) für Leuchten (21) oder dergleichen, Befestigungsvorrichtungen (18) für die Befestigung der Niedervoltstromschienen (1) an Decken oder Wänden und Verbindungsvorrichtungen (4, 5, 6, 7, 8, 27, 28, 37, 38) für die Verbindung von Niedervoltstromschienen (1) aneinander, dadurch gekennzeichnet, daß die Verbindungsvorrichtungen dadurch realisiert werden, daß die leitenden Außenschichten (2) an den Enden der Niedervoltstromschienen (1) jeweils um etwa 90° nach außen umgebogen sind, so daß sich an jedem Ende einer Niedervoltstromschiene zwei Verbindungsflächen (4) ergeben, die an die zwei entsprechenden Verbindungsflächen (4) einer weiteren Niedervoltstromschiene anlegbar sind, wobei die Verbindungsflächen (4) von miteinander zu verbindenden Niedervoltstromschienen (1) durch geeignete Befestigungsmittel (5, 6, 7, 8) aneinander festlegbar sind.

2. Niedervoltstromschienensystem für Leuchten nach Anspruch 1, dadurch gekennzeichnet, daß die Befestigungsmittel eine etwa zentrale Bohrung (5) in den Verbindungsflächen (4) umfassen, wobei deckungsgleich aneinander liegende Verbindungsflächen (4) zweier Niedervoltstromschienen (1) mittels durch die Bohrung (5) hindurchgeschobenen Schrauben (6) und darauf aufgeschraubten Muttern (7) aneinander festlegbar sind.

3. Niedervoltstromschienensystem für Leuchten nach Anspruch 1, dadurch gekennzeichnet, daß die Befestigungsmittel als Klammern (8) ausgeführt sind, die auf die aneinanderliegenden Verbindungsflächen (4) miteinander zu verbindender Niedervoltstromschienen (1) aufschiebbar sind.

4. Niedervoltstromschienensystem für Leuchten nach einem der Ansprüche 1 bis 3, dadurch gekennzeichnet, daß das Niedervoltstromschienensystem weiterhin Verkleidungskörper (9, 15, 20, 26, 36) umfaßt, die wahlweise eine Anschlußvorrichtung (23, 24), eine Befestigungsvorrichtung (18) oder eine Verbindungsvorrichtung (4, 5, 6, 7, 8, 27, 28, 37, 38) umgeben können.

5. Niedervoltstromschienensystem für Leuchten nach einem der Ansprüche 1 bis 4, dadurch gekennzeichnet, daß die Verkleidungskörper (9, 15, 20, 26, 36) eine vorzugsweise zylindrische Hülse (10, 16, 30, 44, 45) mit mindestens einer Aufnahme (12, 32, 54) für die Niedervoltstromschiene (1) und mindestens eine auf die Hülse (10, 16, 30, 44, 45) aufschraubbare oder aufschnappbare Kappe (11, 19, 31, 46, 47) umfassen.

6. Niedervoltstromschienensystem für Leuchten nach einem der Ansprüche 1 bis 5, dadurch gekennzeichnet, daß in die Hülse (10, 16, 30, 44, 45) ein isolierendes Innenteil (13, 23, 33, 48) mit einem Kragen (14, 34, 57) einschiebbar ist, der so in der Aufnahme (12, 32, 54) anliegt, daß bei in der Aufnahme (12, 32, 54) befindlicher Niedervoltstromschiene (1) keine elektrisch leitende Verbindung zwischen den Außenschichten (2) und den Hülsen (10, 16, 30, 44,45) vorliegt.

7. Niedervoltstromschienensystem für Leuchten nach einem der Ansprüche 1 bis 6, dadurch gekennzeichnet, daß die Anschlußvorrichtung als isolierendes Innenteil (23) mit darin angeordneten, in die Aufnahme (12) hineinragenden, federnden, bügelförmigen Kontaktelementen (24) ausgeführt ist, die eine elektrische leitende Verbindung zwischen den leitenden Außenschichten (2) der Niedervoltstromschiene (1) und zwei Zuleitungen (25) herstellen, die aus dem Innenteil (23) herausführbar sind.

8. Niedervoltstromschienensystem für Leuchten nach einem der Ansprüche 1 bis 7, dadurch gekennzeichnet, daß die Aufnahme (12) in Form eines das Innenteil (23) durchquerenden Spalts mit etwa rechteckigem, dem Querschnitt der Niedervoltstromschiene (1) entsprechenden Querschnitt in diesem ausgenommen ist, wobei sich die spaltförmige Aufnahme (12) von der Oberseite des Innenteils (23) nach unten erstreckt.

9. Niedervoltstromschienensystem für Leuchten nach einem der Ansprüche 1 bis 8, dadurch gekennzeichnet, daß die bügelförmigen Kontaktelemente (24) jeweils einen gebogenen, streifenförmigen Teil (63) aufweisen, der nach dem Einschieben der bügelförmigen Kontaktelemente (24) in das Innenteil (23) mit seiner Biegung von außen etwas in die Aufnahme (12) hineinragt, so daß eine in der Aufnahme (12) befindliche Niedervoltstromschiene (1) von den gebogenen streifenförmigen Teilen (63) jeweils auf einer Seite kontaktiert wird.

10. Niedervoltstromschienensystem für Leuchten nach einem der Ansprüche 1 bis 9, dadurch gekennzeichnet, daß sich von beiden Längsseiten der Aufnahme (12) zwei gegenüberliegende Spalte (58, 69) etwa senkrecht zur Längsrichtung der Aufnahme (12) nach außen in dem Innenteil (23) erstrecken, die eine Ausdehnung von der Oberseite des Innenteils (23) bis zur Unterseite der Aufnahme (12) aufweisen, wobei von der Aufnahme (12) etwas nach außen zurückversetzt in jedem der Spalte (58, 69) zwei quaderförmige Anformungen (61) angeordnet sind, die sich von etwas unterhalb der Oberseite des Innenteils (23) bis zur Unterseite der Aufnahme (12) erstrecken und somit eine Schulter in dem Spalt (58, 69) bilden, wobei mittig zwischen den Anformungen (61) ein Zwischenraum frei bleibt.

11. Niedervoltstromschienensystem für Leuchten nach einem der Ansprüche 1 bis 10, dadurch gekennzeichnet, daß sich oben an die gebogenen, streifenförmigen Teile (63) des bügelförmigen Kontaktelements (24) eine etwa rechtwinklige Abwinklung (64) anschließt, wobei diese nach dem Einschieben des bügelförmigen Kontaktelements (24) in das Innenteil (23) auf der von den Anformungen (61) gebildeten Schulter aufliegt und der sich unten daran anschließende gebogene, streifenförmige Teil (63) auf der der Aufnahme (12) zugewandten Seite der Anformungen (61) teilweise an diesen anliegt und teilweise etwas in die Aufnahme (12) hineinragt.

12. Niedervoltstromschienensystem für Leuchten nach einem der Ansprüche 1 bis 11, dadurch gekennzeichnet, daß das Innenteil (23) etwa die Form eines aufrechten Zylinders aufweist mit einem Außengewinde (62) im oberen Randbereich, wobei eine Kappe (19) mittels eines darin vorgesehenen Innengewindes (67) von oben auf das Innenteil (23) aufgeschraubt werden kann.

13. Niedervoltstromschienensystem für Leuchten nach einem der Ansprüche 1 bis 12, dadurch gekennzeichnet, daß das Innenteil (23) im unteren Bereich eine Öffnung aufweist, durch die die Zuleitungen (25) aus dem Innenteil (23) herausgeführt werden können.

14. Niedervoltstromschienensystem für Leuchten nach einem der Ansprüche 1 bis 13, dadurch gekennzeichnet, daß in der Abwinklung (64) des bügelförmigen Kontaktelements (24) eine etwa zentrale Bohrung angeordnet ist und oberhalb dieser auf der Abwinklung (64) eine ringförmige Hülse (72) mit einer diese durchdringenden Gewindebohrung (73) befestigt ist, wobei in dem Innenteil (23) auf beiden Seiten im Bereich der oberen Enden der Spalte (69) jeweils eine Bohrung (70) vorgesehen ist, die das Einschrauben einer Schraube (71) von außerhalb des Innenteils (23) in die Gewindebohrung (73) des in das Innenteil (23) eingeschobenen bügelförmigen Kontaktelements (24) erlaubt.

15. Niedervoltstromschienensystem für Leuchten nach einem der Ansprüche 1 bis 13, dadurch gekennzeichnet, daß sich der von der Aufnahme (12) nach außen erstreckende Spalt (58) kurz vor seinem Ende zu einem zu der Aufnahme (12) parallelen Schlitz (59) erweitert, und daß an die Abwinklung (64) des bügelförmigen Kontaktelements (24) ein sich nach oben erstreckender Abschnitt (65) mit etwa quadratischem Umriß anschließt, der sich nach Einschieben des bügelförmigen Kontaktelements (24) in das Innenteil (23) in dem Schlitz (59) befindet, wobei in dem Abschnitt (65) mit etwa quadratischem Grundriß eine Lasche (66) ausgeformt ist, die bei in dem Schlitz (59) befindlichem Abschnitt (65) in Richtung auf das Ende der Spalte (58) nach außen ragt.

16. Niedervoltstromschienensystem für Leuchten nach einem der Ansprüche 1 bis 15, dadurch gekennzeichnet, daß auf der Außenseite des Innenteils (23) ein Kragen (14) die Aufnahme (12) so umgibt, daß eine von unten auf das Innenteil (23) aufgeschobene, in ihrer Form etwa dem Innenteil (23) entsprechende Hülse (16) bündig mit dem Kragen (14) abschließt.

17. Niedervoltstromschienensystem für Leuchten nach einem der Ansprüche 1 bis 16, dadurch gekennzeichnet, daß die Verkleidung einer Verbindungsvorrichtung dadurch realisiert wird, daß in ein isolierendes Innenteil (13, 33, 48) der Verbindungsbereich (4, 27, 37) zweier oder mehrerer miteinander verbundener Niedervoltstromschienen (1) einschiebbar ist.

18. Niedervoltstromschienensystem für Leuchten nach einem der Ansprüche 1 bis 17, dadurch gekennzeichnet, daß das Niedervoltstromschienensystem weiterhin elektrisch leitende Kontaktblöcke (27, 37) umfaßt, die auf mindestens zwei benachbarten ebenen Seitenflächen Gewindebohrungen (28, 38) aufweisen, so daß die Verbindungsfläche (4) einer Niedervoltstromschiene (1) mittels einer Schraube (6) an einer dieser Seitenflächen befestigbar ist.

19. Niedervoltstromschienensystem für Leuchten nach einem der Ansprüche 1 bis 18, dadurch gekennzeichnet, daß vier Kontaktblöcke (27, 37) elektrisch voneinander isoliert etwa in den Ecken eines Quadrats angeordnet sind, wobei jeweils zwei mit Gewindebohrungen (28, 38) ausgestattete Seitenflächen eines jeden der Kontaktblöcke (27, 37) nach außen gerichtet sind, und wobei sich diagonal gegenüberliegende Kontaktblöcke (27, 37) mittels eines Kabels (29) oder eines anderen geeigneten Verbindungsmittels (39) elektrisch leitend miteinander verbunden sind.

20. Niedervoltstromschienensystem für Leuchten nach einem der Ansprüche 1 bis 19, dadurch gekennzeichnet, daß der Verkleidungskörper (36) zwei aneinanderlegbare ringförmige Hülsenteile (44, 45) und zwei auf diese aufsetzbare Kappen (46, 47) sowie ein in die Hülsenteile (44, 45) einschiebbares topfförmiges isolierendes Innenteil (48) umfaßt, wobei eine axial in dem Verkleidungskörper (36) ausgerichtete Gewindestange (50) vorgesehen ist, mit Hilfe der die Hülsenteile (44, 45), die Kappen (46, 47) und das topfförmige isolierende Innenteil (48) aneinander festlegbar sind.

21. Niedervoltstromschienensystem für Leuchten nach einem der Ansprüche 1 bis 20, dadurch gekennzeichnet, daß die Hülsenteile (44, 45) und das topfförmige isolierende Innenteil (48) jeweils vier einander entsprechende einseitig offene rechteckige Schlitze (54, 55) aufweisen, die jeweils in Winkelabständen von 90° zueinander angeordnet sind.

22. Niedervoltstromschienensystem für Leuchten nach einem der Ansprüche 1 bis 21, dadurch gekennzeichnet, daß als Verbindungsmittel für jeweils zwei Kontaktblöcke (37) ein Ring (39) verwendet wird, an dem einseitig die beiden Kontaktblöcke (37) sich radial auf unterschiedlichen Seiten seiner zentralen Bohrung gegenüberliegend und von dieser beabstandet befestigt sind.

23. Niedervoltstromschienensystem für Leuchten nach einem der Ansprüche 1 bis 22, dadurch gekennzeichnet, daß die Kontaktblöcke (37) etwa prismenförmig gestaltet sind, wobei deren an dem Ring (39) anliegende und deren von dem Ring (39) abgekehrte Seiten etwa die Form eines gleichschenklig rechtwinkligen Dreiecks aufweisen, wobei die sich auf unterschiedlichen Seiten der zentralen Bohrung radial gegenüberliegenden Flächen der Kontaktblöcke (37) die Verbindungsflächen zwischen den Hypothenusen der gleichschenklig rechtwinkligen Dreiecke sind, und wobei die von dem Ring nach außen ragenden, mit Gewindebohrungen (38) für das Anschrauben der Niedervoltstromschienen (1) versehenen Seitenflächen der Kontaktblöcke (37) die Verbindungsflächen zwischen den Katheten der gleichschenklig rechtwinkligen Dreiecke sind.

24. Niedervoltstromschienensystem für Leuchten nach einem der Ansprüche 1 bis 23, dadurch gekennzeichnet, daß die Gewindebohrungen (38) für das Anschrauben der Niedervoltstromschienen (1) auf den entsprechenden Seitenflächen der Kontaktblöcke (37) etwas außermittig in Richtung auf die der an dem Ring (39) anliegenden Seiten gegenüberliegenden Seiten der Kontaktblöcke (37) angeordnet sind.

25. Niedervoltstromschienensystem für Leuchten nach einem der Ansprüche 1 bis 24, dadurch gekennzeichnet, daß für die Halterung der beiden Ringe (39) mit den jeweils zwei daran befestigten Kontaktblöcken (37) in dem Verkleidungskörper (36) ein etwa würfelförmiges isolierendes Innenteil (40) vorgesehen ist, an das die beiden Ringe (39) von zwei gegenüberliegenden Seiten des Innenteils (40) so anlegbar sind, daß die vier mit den Ringen (39) verbundenen Kontaktblöcke (37) mit ihren Verbindungsflächen zwischen den Hypothenusen der Dreiecke an den Außenseiten des etwa würfelförmigen isolierenden Innenteils (40) jeweils um 90° gegeneinander versetzt drehfest anliegen, wobei die jeweils nebeneinander angeordneten Kontaktblöcke (37) voneinander elektrisch isoliert sind.

26. Niedervoltstromschienensystem für Leuchten nach einem der Ansprüche 1 bis 25, dadurch gekennzeichnet, daß das etwa würfelförmige isolierende Innenteil (40) eine durchgehende Bohrung (56) aufweist, die die an die Ringe (39) anlegbaren Seitenflächen des Innenteils (40) mittig durchdringt, wobei der Innendurchmesser der Bohrung (56) etwa dem Außendurchmesser der axial in dem Verkleidungskörper (36) ausgerichteten Gewindestange (50) entspricht.

27. Niedervoltstromschienensystem für Leuchten nach einem der Ansprüche 1 bis 26, dadurch gekennzeichnet, daß das etwa würfelförmige isolierende Innenteil (40) auf den beiden an die Ringe (39) anlegbaren Seitenflächen jeweils einen die Bohrung (56) umgebenden rohrförmigen Ansatz (41) aufweist, auf den jeweils ein Ring (39) mit den innenteilseitig befestigten Kontaktblöcken (37) formschlüssig aufschiebbar ist.

28. Niedervoltstromschienensystem für Leuchten nach einem der Ansprüche 1 bis 27, dadurch gekennzeichnet, daß an dem etwa würfelförmigen isolierenden Innenteil (40) an den beiden an die Ringe (39) anlegbaren Seitenflächen jeweils einander gegenüberliegende abgerundete Anformungen (42, 43) angeordnet sind, die mit den Oberflächen der an die Ringe (39) anlegbaren Seitenflächen abschließen und deren Ausdehnung etwa den über den würfelförmigen Grundkörper des isolierenden Innenteils (40) herausragenden zwischen den beiden Kontaktblöcken (37) befindlichen Abschnitten des auf einen der Ansätze (41) aufgeschobenen Rings (39) entspricht, wobei die Dicke der Anformungen (42, 43) etwa der Dicke der Ringe (39) entspricht, und wobei die an den gegenüberliegenden Seitenflächen angeordneten Anformungen (42, 43) um 90° gegeneinander versetzt sind.
